# FASCICULE DE BREVET EUROPEEN

(11) **EP 2 509 177 B1**
(45) Date de publication et mention de la délivrance du brevet: **16.10.2013**
(21) Numéro de dépôt: 12161422.6
(22) Date de dépôt: 27.03.2012
(51) Int. Cl.: H02G 13/00

(54) **Dispositif de protection contre la foudre avec électrode captrice présentant une extrémité à géométrie virtuellement variable, et procédé correspondant**
Blitzschutzvorrichtung mit Aufnehmerelektrode, die an einem Ende eine virtuell variable Geometrie aufweist, und entsprechendes Verfahren
Lightning arrester device with sensing electrode having one end with virtually variable geometry and corresponding method

(30) Priorité: 07.04.2011 FR 1153044
(43) Date de publication de la demande: 10.10.2012
(73) Titulaire: Indelec, 59500 Douai (FR)
(72) Inventeur: Alconchel, Olivier, 24300 Nontron (FR); Lefort, Bertrand, 59500 Douai (FR)
(74) Mandataire: Balesta, Pierre

(56) Documents cités:
- EP-A1- 0 596 775
- WO-A1-2010/106254
- US-A- 6 069 314
- US-A1- 2009 000 802

## Description

La présente invention a pour objet un dispositif de protection contre la foudre, et un procédé correspondant. Elle trouve notamment son application aux dispositifs de type paratonnerre comprenant une électrode captrice dite « tige simple » permettant la décharge du courant de foudre dans la terre.

Le paratonnerre, inventé par Benjamin Franklin au XVIIIème siècle, constitue une protection primaire de base contre la foudre, dont le principe fondamental est de procurer à la décharge principale un chemin préférentiel permettant d'écouler l'énergie dans la terre.

Cependant, un paratonnerre le plus simple, réduit à une tige simple, ne permet pas de gérer de manière adéquate tous les phénomènes qui entrent en jeu lors du déroulement d'un orage. Il arrive qu'un paratonnerre ne remplisse donc pas sa fonction correctement.

La foudre est effectivement une décharge de haute intensité avec une grande capacité destructrice. Ce phénomène naturel reste aujourd'hui difficilement prévisible.

Pour faire face à cette situation, les systèmes connus de protection contre la foudre cherchent notamment à guider la décharge vers la terre de façon contrôlée, afin d'éviter les dégâts dans les installations industrielles et noyaux de population.

Le paratonnerre reste donc un des éléments fondamentaux dans ces systèmes de protection contre la foudre.

On connaît ainsi en effet des dispositifs de type paratonnerre, disposés par exemple sur le toit de certains bâtiments, dont le but est de capter la foudre pour que celle-ci soit canalisée et évacuée à la terre, et ainsi ne frappe pas n'importe où.

Dans sa version de base, un paratonnerre est constitué par un mât ou une électrode captrice métallique, dont l'extrémité peut tout aussi bien être effilée (pointe) ou arrondie, et qui est placée en hauteur. Cette électrode captrice est reliée à la terre par un câble conducteur.

Différents types de paratonnerres perfectionnés ont été développés dont l'efficacité est augmentée.

De tels paratonnerres prennent en compte de manière plus fine le phénomène naturel constitué par la foudre tel qu'il est expliqué ci-après.

Par beau temps, on peut mesurer à la surface de l'écorce terrestre, et sur terrain plat, un champ électrique, vertical positif par convention, de l'ordre de 100 à 150 V/m, dû à des charges positives situées à des altitudes de l'ordre de 50 km.

Lors du développement d'un processus orageux, les nuages se chargent électriquement, positivement en partie supérieure et négativement en partie inférieure. Parfois, un îlot de charges positives est enserré dans la masse négative.

Globalement, le nuage orageux constitue donc un véritable dipôle, les charges de signes contraires créant entre elles des champs électriques intenses. Lorsqu'un gradient limite de champ électrique, appelé parfois gradient de claquage, est atteint, la décharge se produit. Si cette décharge a lieu entre couches intérieures d'un même nuage, on parle d'éclair intra nuage, et si cette décharge a lieu entre couches de nuages différents, on parle d'éclairs inter nuage.

Plus précisément, le système constitué par les nuages chargés et le sol, séparés par une couche d'air de plusieurs centaines de mètres à plusieurs kilomètres, joue le rôle d'un gigantesque condensateur dans lequel l'air joue le rôle de diélectrique.

Les phénomènes physiques associés à la foudre présentent une forte analogie avec les procédés de dégradation des condensateurs.

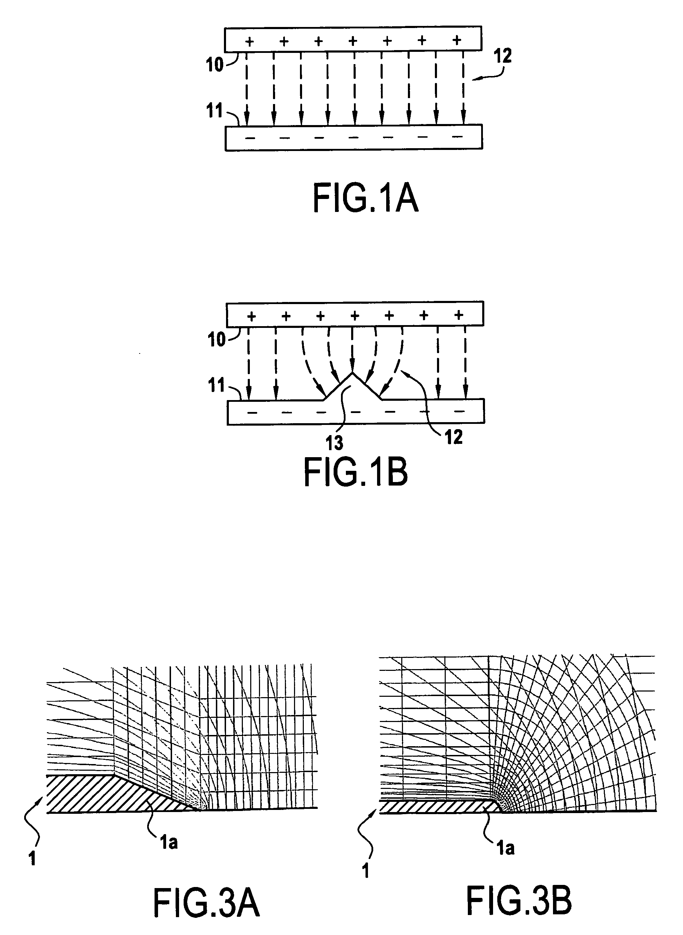

Ainsi, en référence aux figures 1A et 1B, dans un condensateur constitué par des surfaces parfaites 10, 11 les lignes de champ électrique 12 partent perpendiculairement de la surface chargée positivement 10, et rentrent également perpendiculairement dans celle chargée négativement 11 (voir figure 1A).

Les irrégularités des surfaces causent un effet de concentration des lignes de champ 12 (voir figure 1B). Cette intensification locale du champ est connue sous le nom d'effet de pointe.

La forte amplitude du champ électrique dans les alentours de l'aspérité 13 cause, à partir d'un certain seuil, l'ionisation des molécules présentes dans le diélectrique.

Ce phénomène d'ionisation cause, à son tour, l'émission de lumière que l'on appelle effet couronne ou lumière de couronne.

Les particules chargées libérées pendant l'ionisation sont accélérées par le champ électrique, suivant les lignes de force, et finissent par heurter d'autres molécules. Ce choc provoque une nouvelle ionisation, lors de laquelle de nouvelles particules chargées sont libérées, et suivent le même procédé d'accélération et d'impact.

Le résultat final est appelé avalanche électronique, qui se manifeste comme un courant qui se propage à travers l'espace compris entre les plaques du condensateur.

Cette avalanche est alimentée par l'énergie produite par le champ électrique. Ce phénomène constitue le début d'un procédé de dégradation, ou rupture, du matériel diélectrique, qui devient conducteur aux endroits où l'avalanche électronique a lieu.

Si le canal conducteur ainsi créé arrive à connecter les deux plaques du condensateur, un courant beaucoup plus intense que celui de l'avalanche électronique s'établit, en cherchant à rééquilibrer les charges des deux plaques.

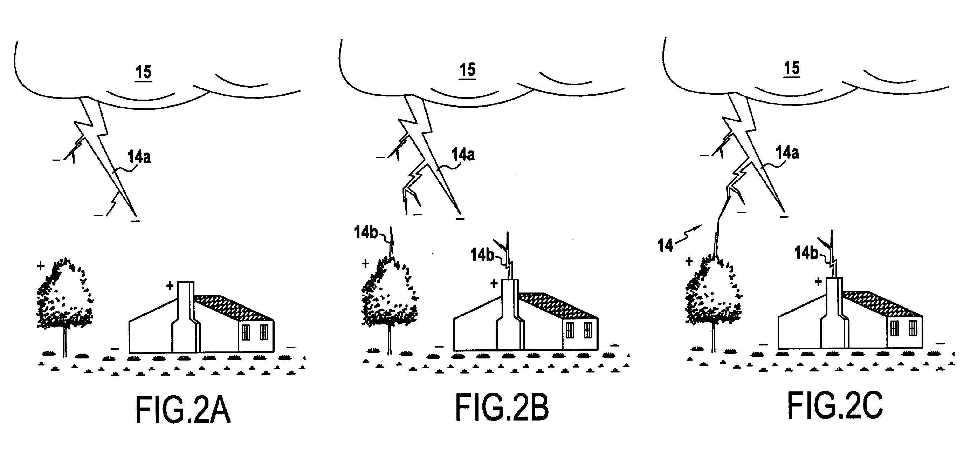

Par analogie, et en référence aux figures 2A à 2C, à l'échelle atmosphérique, la foudre est le phénomène par lequel le diélectrique (couche d'air) est dégradé avec création d'un canal conducteur 14 qui mène à la décharge du nuage orageux 15 vers le sol (voir figures 2A, 2B, 2C).

La foudre du type le plus fréquent, dans les régions à climat tempéré, commence par une décharge négative 14a descendant des nuages vers le sol, que l'on appelle généralement traceur descendant 14a (voir figure 2A).

Ce traceur 14a cause une brusque augmentation du champ électrique lorsqu'il approche la zone d'impact. Cette augmentation donne lieu à l'apparition de l'effet couronne sur les irrégularités du terrain.

Des différents courants d'avalanche électronique, appelés traceurs ascendants 14b, sont alors créés (figure 2B). Ces courants se propagent vers le traceur descendant 14a. Quand le traceur descendant 14a et un des traceurs ascendants 14b sont amenés au contact, un canal conducteur 14 est établi, permettant au nuage 15 de se décharger vers le sol (figure 2C). Le reste des traceurs ascendants 14b s'épuisent une fois que l'intensité du champ électrique redescend.

Un paratonnerre est donc basé sur le principe de l'effet de pointe.

En effet, un paratonnerre favorise la formation d'un traceur ascendant lors de l'approche d'un traceur descendant.

De plus, l'objet est généralement placé en hauteur, de façon à ce que le traceur ascendant sorti du paratonnerre ait un avantage sur les éventuels autres traceurs ascendants provenant des irrégularités plus basses.

En plaçant ainsi un paratonnerre en hauteur, on cherche à maximiser la probabilité que le traceur ascendant sorti du paratonnerre établisse le contact avec le traceur descendant et donne lieu au canal conducteur.

Une fois créé, ce canal permet de guider la décharge de la foudre à travers le paratonnerre et le câble conducteur jusqu'à la terre.

Un des problèmes qui se pose est donc de faire en sorte qu'un effet couronne se transforme en un traceur ascendant à partir de l'électrode captrice du paratonnerre.

On sait que la charge d'espace positive déposée par l'effet couronne abaisse localement le champ électrique près de l'extrémité libre de l'électrode captrice du paratonnerre. On sait également que l'avalanche électronique associée à l'effet couronne continue tant que le champ créé par les ions positifs n'affaiblit pas le champ ambiant au-delà d'un certain seuil.

Ainsi, une valeur minimale du champ ambiant est nécessaire pour obtenir le développement d'un traceur ascendant positif. Cette valeur minimale est parfois appelée « champ de développement ».

On constate par ailleurs que l'intensité du champ électrique à proximité de l'extrémité libre de l'électrode captrice varie selon la géométrie de cette extrémité.

Ainsi, par exemple, l'intensité du champ électrique est plus importante à proximité d'une électrode captrice à extrémité libre effilée, qu'à proximité d'une électrode captrice à extrémité libre arrondie.

De même, l'intensité du champ électrique à proximité d'une électrode captrice à extrémité libre effilée retombe plus rapidement, au fur et à mesure que l'on s'éloigne de l'extrémité de l'électrode captrice, que dans le cas d'une électrode captrice à extrémité libre arrondie.

On constate également que les ions positifs créés à proximité de l'extrémité libre de l'électrode captrice ont une durée de vie plus longue lorsque cette extrémité libre est arrondie que lorsque cette extrémité libre est en forme de pointe effilée.

On voit donc que le comportement électrique de l'extrémité libre de l'électrode captrice, en ce qui concerne l'effet couronne, varie en fonction de la géométrie de cette extrémité.

C'est pourquoi il existe des paratonnerres de différentes sortes, présentant des électrodes captrices à extrémité libre de différentes géométries, en particulier des électrodes captrices à extrémité libre relativement effilée, donc avec un rayon de courbure relativement faible, ou des électrodes captrices à extrémité plus arrondie, donc avec un rayon de courbure relativement important.

En fait, le rayon de courbure doit être tel que l'amorçage de l'effet couronne ait lieu le plus tôt possible, mais également tel que cet effet couronne persiste suffisamment longtemps pour que le champ électrique ambiant évolue jusqu'à atteindre le champ de développement.

Il a été établi qu'il existe un rayon de courbure critique.

En effet, en dessous du rayon de courbure critique, on est en présence d'un régime dit pulsé. Dans ce régime, les ions positifs créés abaissent localement le champ électrique, ce qui freine l'ionisation associée à l'effet couronne. Au bout d'un certain moment, les ions disparaissent, ce qui fait remonter le champ électrique et redémarrer l'ionisation.

Un tel régime pulsé est donc moins efficace, car l'ionisation s'arrête périodiquement et ne permet pas l'évolution en un traceur ascendant, même s'il n'est pas gênant puisque les charges d'espace disparaissent périodiquement au niveau de l'extrémité de l'électrode captrice.

On considère que le rayon de courbure critique correspond au cas dans lequel la toute première ionisation par effet couronne génèrera le traceur ascendant. Un rayon de courbure supérieur au rayon de courbure critique est inintéressant, puisque le champ de développement croît avec le rayon de courbure. Donc, au-delà du rayon de courbure critique, le champ de développement peut devenir trop important pour être atteint.

Ainsi, une électrode captrice à extrémité en pointe effilée, donc avec un rayon de courbure relativement faible, permet de démarrer l'ionisation plus tôt qu'une électrode captrice à extrémité arrondie, donc avec un rayon de courbure relativement important.

Par contre, une électrode captrice à extrémité en pointe effilée maintient l'ionisation moins longtemps qu'une électrode captrice à extrémité arrondie.

Par conséquent, une électrode captrice à extrémité en pointe effilée sera plus efficace qu'une électrode captrice à extrémité arrondie si le champ électrique varie fortement dans un laps de temps court.

Par contre, si le champ électrique varie peu, l'effet couronne s'arrête plus rapidement avec une électrode captrice à extrémité à pointe effilée qu'avec une électrode captrice à extrémité arrondie. Dans ce cas, l'électrode captrice à extrémité arrondie sera donc plus efficace, bien que l'effet couronne ait démarré plus tard qu'avec l'électrode captrice à extrémité à pointe effilée.

Ensuite, lorsque le traceur ascendant a démarré, les charges positives seront plus facilement créées par effet couronne au niveau de l'extrémité de l'électrode captrice si celle-ci est plutôt en forme de pointe effilée, ce qui permet d'entretenir le canal ionisé.

Le fonctionnement efficace de l'électrode captrice dépend donc notamment du champ électrique ambiant, et de ses variations.

Cependant, il n'est pas possible de changer la géométrie de l'extrémité de l'électrode captrice, au cours de l'évolution d'un orage.

Il faut donc choisir un type d'électrode captrice, par exemple en fonction de statistiques sur l'évolution du champ électrique en période orageuse en un lieu donné.

L'efficacité d'une électrode captrice au regard d'une situation orageuse qui se traduit par un champ électrique donné, qui évolue d'une façon donnée, dépend donc notamment du coefficient d'amplification du champ électrique de l'extrémité de l'électrode captrice.

A titre d'exemple, les figures 3A et 3B représentent les cartes de distribution des lignes de champ électrique équipotentielles près de l'extrémité la de l'électrode captrice 1, respectivement dans le cas d'une extrémité à pointe effilée, donc à faible rayon de courbure, et dans le cas d'une extrémité arrondie, donc à rayon de courbure plus important.

On connaît également des dispositifs qui combinent, en l'extrémité de l'électrode captrice, la géométrie arrondie et la géométrie plus effilée, par exemple avec une tête arrondie surmontée d'une ou plusieurs pointes effilées.

Cependant, même dans ce cas, la géométrie de l'extrémité de l'électrode captrice reste figée, et n'est donc pas adaptée à toutes les situations.

On connaît enfin des dispositifs de protection contre la foudre qui comprennent des moyens de variation de la quantité des ions présents à proximité de l'extrémité libre d'une électrode captrice, tel que celui décrit dans le document US 6 069 314. En revanche, un tel dispositif ne permet pas, entre autres, de faire varier la quantité des ions en fonction de la mesure du champ électrique ambiant.

L'objet de la présente invention est donc d'apporter une solution aux problèmes précités parmi d'autres problèmes.

En particulier, l'objet de la présente invention est de proposer un dispositif dans lequel le comportement électrique de l'électrode captrice peut varier, même si la géométrie est fixée, notamment en ce qu'elle présente une extrémité dont le rayon de courbure est fixé.

L'invention se rapporte ainsi, selon un premier aspect, à un dispositif de protection contre la foudre comprenant une électrode captrice configurée pour capter un courant de foudre et pour le décharger dans la terre, cette électrode captrice étant reliée à la terre et présentant une extrémité libre.

Le dispositif comprend des moyens de variation du comportement électrique de l'extrémité libre de l'électrode captrice, configurés pour faire varier au moins le coefficient d'amplification du champ électrique local au voisinage de cette extrémité libre.

Le dispositif comprend en outre des moyens de mesure du champ électrique ambiant et/ou de sa variation au cours du temps, reliés aux moyens de variation du comportement électrique de l'extrémité libre et des moyens de déclenchement pour déclencher les moyens de variation en fonction de la valeur du champ électrique ambiant et/ou de sa variation au cours du temps obtenue par les moyens de mesure.

Dans toute la suite, on définit la notion de voisinage de l'extrémité libre de l'électrode captrice comme étant le volume au voisinage de cette extrémité libre dans lequel les lignes équipotentielles de champ électrique sont déformées par la présence de l'extrémité par rapport à leur état de base horizontal (voir figures 3A et 3B).

Ainsi, dans la mesure où l'évolution d'un traceur descendant en formation induit des variations du champ électrique ambiant, les moyens de mesure du champ électrique ambiant et/ou de sa variation au cours du temps permettent de déclencher les moyens de variation indirectement en fonction de l'évolution d'un traceur descendant, c'est-à-dire indirectement de façon synchronisée avec l'évolution d'un tel traceur descendant.

De préférence, les moyens de déclenchement déclenchent les moyens de variation lorsque la variation instantanée du champ électrique ambiant au cours du temps dépasse un seuil prédéterminé.

Avantageusement, ces moyens de variation sont distants de l'électrode captrice.

Ainsi, en faisant varier par exemple le coefficient d'amplification du champ électrique local au voisinage de l'extrémité libre de l'électrode captrice, on fait varier la répartition des lignes équipotentielles du champ électrique autour de l'électrode captrice. On obtient ainsi une électrode captrice dont l'extrémité libre présente une géométrie virtuellement variable, dans la mesure où elle se comporte comme une électrode captrice à extrémité libre plus ou moins effilée en fonction de l'action des moyens de variation.

Selon une deuxième variante, éventuellement en combinaison avec la première, les moyens de variation du comportement électrique de l'extrémité libre de l'électrode captrice comprennent un moyen auxiliaire configuré pour être porté à au moins un potentiel électrique déterminé, disposé au voisinage de l'extrémité libre et relié à un générateur de tension électrique.

De préférence, ce moyen auxiliaire est disposé en-dessous de cette extrémité libre.

De préférence également, ce moyen auxiliaire est disposé à une distance de l'électrode captrice inférieure ou égale à 15 mm.

De préférence encore, le moyen auxiliaire comprend un élément métallique.

Cet élément métallique peut être un anneau, un disque ou un cylindre creux.

Selon une autre variante de réalisation, éventuellement en combinaison avec une ou plusieurs des précédentes, l'extrémité libre présente une pointe.

Avantageusement, les moyens de déclenchement sont configurés pour polariser le moyen auxiliaire avec une tension électrique de signe opposé à celui du champ ambiant ou avec une tension nulle, de telle sorte que l'extrémité libre de l'électrode captrice est rendue virtuellement plus arrondie.

De manière avantageuse, les moyens de déclenchement sont configurés pour polariser le moyen auxiliaire avec une tension électrique du même signe que celui du champ ambiant, de telle sorte que l'extrémité libre de l'électrode captrice est rendue virtuellement plus effilée.

De manière avantageuse, les moyens de variation permettent de faire varier la répartition des lignes équipotentielles du champ électrique autour de l'électrode captrice.

L'invention se rapporte également, selon un deuxième aspect, à un procédé de captation d'un courant de foudre dans une électrode captrice reliée à la terre et présentant une extrémité libre.

Ce procédé consiste notamment à faire varier au moins le coefficient d'amplification du champ électrique local au voisinage de cette extrémité libre, par l'intermédiaire de moyens de variation du comportement électrique de cette extrémité libre isolés électriquement de l'électrode captrice.

Dans une variante de mise en oeuvre, le procédé comprend une étape de mesure du champ électrique ambiant et/ou de sa variation au cours du temps, et une étape de variation de la caractéristique électrique de l'extrémité libre en fonction de la valeur mesurée du champ électrique ambiant et/ou de sa variation au cours du temps.

De manière avantageuse, la variation de la caractéristique électrique de l'extrémité libre est obtenue en faisant varier le potentiel électrique d'un moyen auxiliaire disposé au voisinage de l'extrémité libre et relié à un générateur de tension électrique.

Avantageusement, le procédé comprend une étape au cours de laquelle le moyen auxiliaire est polarisé avec une tension de signe opposé à celui du champ ambiant ou avec une tension nulle, de telle sorte que l'extrémité libre de l'électrode captrice est rendue virtuellement plus arrondie.

De manière avantageuse, le procédé comprend une étape au cours de laquelle le moyen auxiliaire est polarisé avec une tension de même signe que celui du champ ambiant, de telle sorte que l'extrémité libre de l'électrode captrice est rendue virtuellement plus effilée.

Avantageusement, le procédé comprend une première étape au cours de laquelle le moyen auxiliaire est polarisé avec une tension de signe opposé à celui du champ ambiant ou avec une tension nulle, suivie d'une deuxième étape au cours de laquelle le moyen auxiliaire est polarisé avec une tension de même signe que celui du champ ambiant.

De manière avantageuse, le procédé comprend une première étape au cours de laquelle le moyen auxiliaire est polarisé avec une tension de signe opposé à celui du champ ambiant, suivie d'une deuxième étape au cours de laquelle le moyen auxiliaire est polarisé avec une tension nulle ou une tension de même signe que celui du champ ambiant.

Avantageusement, le procédé comprend une première étape au cours de laquelle le moyen auxiliaire est polarisé avec une première tension de signe opposé à celui du champ ambiant, suivie d'une deuxième étape au cours de laquelle le moyen auxiliaire est polarisé avec une deuxième tension de signe opposé à celui du champ ambiant, la valeur de la deuxième tension étant supérieure à celle de la première tension.

Les comparaisons de valeurs détaillées dans la présente demande doivent être comprises algébriquement ; ainsi, une première valeur positive dite supérieure à une seconde valeur positive signifie que la valeur absolue de la première valeur est supérieure à la valeur absolue de la deuxième valeur. Inversement, une première valeur négative dite supérieure à une seconde valeur négative signifie que la valeur absolue de la première valeur est inférieure à la valeur absolue de la deuxième valeur. Enfin, toute valeur positive est par définition supérieure à toute valeur négative.

De préférence, le procédé comprend une première étape au cours de laquelle le moyen auxiliaire est polarisé avec une première tension de même signe que celui du champ ambiant, suivie d'une deuxième étape au cours de laquelle le moyen auxiliaire est polarisé avec une deuxième tension de même signe que celui du champ ambiant, la valeur de la deuxième tension étant supérieure à celle de la première tension.

De manière avantageuse, la deuxième étape est réalisée lorsque la variation instantanée du champ ambiant au cours du temps dépasse un seuil prédéterminé.

D'autres caractéristiques et avantages de l'invention apparaîtront plus clairement et de manière complète à la lecture de la description ci-après des variantes préférées de réalisation et de mise en oeuvre, lesquelles sont données à titre d'exemples non limitatifs et en référence aux dessins annexés suivants :
- les figures 1A, 1B représentent schématiquement le phénomène d'effet de pointe dans un condensateur ;
- les figures 2A, 2B, 2C représentent schématiquement le processus de formation de la foudre ;
- les figures 3A, 3B représentent schématiquement les cartes de distribution des lignes de champ électrique équipotentielles près de l'extrémité d'une électrode captrice respectivement à extrémité en pointe effilée et à extrémité arrondie ;
- la figure 4 représente schématiquement un exemple du dispositif selon l'invention ; et
- les figures 5A, 5B représentent schématiquement et respectivement deux variantes de réalisation.

Les figures 1A, 1B, 2A, 2B, 2C, 3A et 3B ont été présentées plus haut.

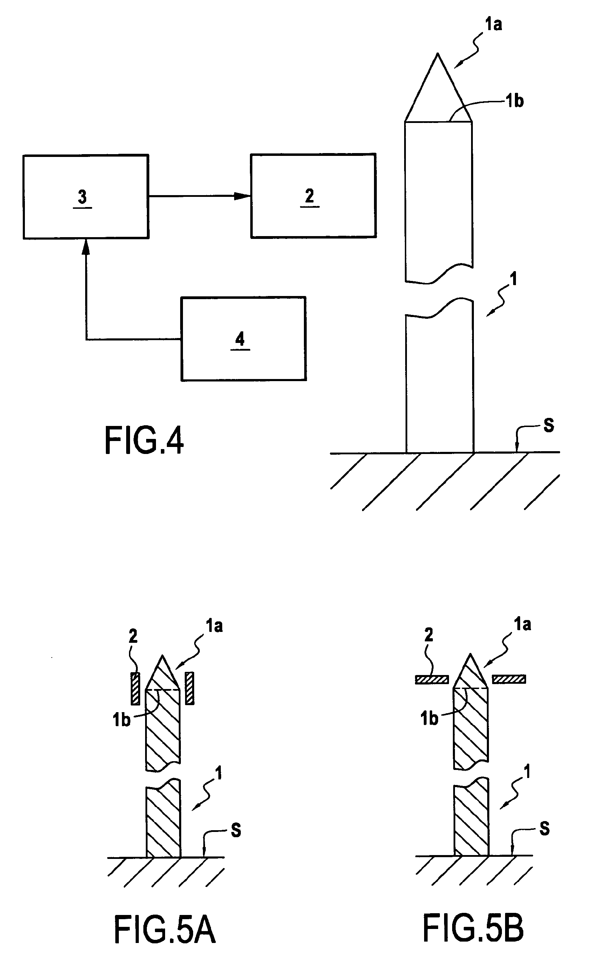

Le dispositif représenté à la figure 4 comprend classiquement une électrode captrice 1 reliée à la terre, soit en étant directement reliée à une prise de terre dédiée enfouie dans le sol S tel que représenté, soit plus fréquemment en étant reliée à une prise de terre par un conducteur électrique lorsqu'elle est placée par exemple sur le toit d'un bâtiment.

L'électrode captrice 1 présente une extrémité libre 1a, orientée vers le haut, et configurée pour capter un courant de foudre, selon le phénomène physique décrit plus haut.

Cette extrémité libre 1a de l'électrode captrice 1 est de préférence orientée verticalement, mais peut également être orientée selon une direction formant avec la direction horizontale un angle quelconque non nul.

Cette électrode captrice 1 prend ici la forme d'une tige ou d'un mât 1, dont le diamètre diminue au moins à partir d'un certain niveau 1b jusqu'à sa pointe. L'extrémité 1a de l'électrode 1 présente alors, dans une de ses variantes, sensiblement la forme d'un cône avec un certain angle d'ouverture rendant cette extrémité 1a plus ou moins effilée.

Plus généralement, l'électrode 1 voit son diamètre effectif, ou son diamètre équivalent si sa section n'est pas strictement circulaire, réduire plus ou moins rapidement et jusqu'à une valeur plus ou moins petite, au niveau de son extrémité 1a jusqu'à son apex.

L'amplitude de la réduction du diamètre, et sa valeur finale, définissent le caractère plus ou moins effilé ou arrondi de l'extrémité libre 1a de l'électrode captrice 1, selon une géométrie par exemple conique, hémisphérique ou encore ogivale.

Au voisinage de l'extrémité libre 1a de l'électrode captrice 1, sont disposés des moyens de variation 2, 3 du comportement électrique de l'extrémité libre 1a.

Ces moyens de variation 2, 3 sont configurés pour faire varier au moins une caractéristique électrique de l'extrémité libre 1a de l'électrode captrice 1.

Il peut s'agir par exemple de faire varier le coefficient d'amplification du champ électrique local au voisinage de l'extrémité libre 1a.

Ces moyens de variation 2, 3 permettent dans ce cas de faire varier la répartition des lignes équipotentielles du champ électrique autour de l'électrode captrice 1.

Le dispositif objet de la présente invention comporte également des moyens de déclenchement pour déclencher les moyens de variation.

Le déclenchement par les moyens de déclenchement des moyens de variation 2, 3 permet alternativement d'augmenter le coefficient d'amplification du champ électrique local au voisinage de l'extrémité libre 1a, auquel cas l'électrode captrice 1 présente un champ électrique au voisinage de son extrémité libre 1a similaire au champ électrique qui serait constaté au voisinage d'une électrode captrice 1 présentant une extrémité plus effilée que l'extrémité libre 1a, ou de diminuer le coefficient d'amplification du champ électrique local au voisinage de l'extrémité libre 1a, auquel cas l'électrode captrice 1 présente un champ électrique au voisinage de son extrémité libre 1a similaire au champ électrique qui serait constaté au voisinage d'une électrode captrice 1 présentant une extrémité plus arrondie que l'extrémité libre 1a.

On peut ainsi obtenir une électrode captrice 1 dont l'extrémité libre 1a présente une géométrie virtuellement variable, dans la mesure où elle se comporte comme une électrode captrice 1a à extrémité libre plus ou moins effilée en fonction de l'action des moyens de variation 2, 3.

Par exemple, en fonction de l'action des moyens de variation 2, 3, l'électrode captrice 1 présentera une répartition des lignes équipotentielles du champ électrique sur son pourtour plutôt semblable à la carte représentée à la figure 3A ou à celle représentée à la figure 3B.

Lorsque l'on intègre au dispositif des moyens de mesure 4 du champ électrique ambiant et/ou de la variation de ce champ électrique ambiant au cours du temps, reliés aux moyens de variation 2, 3, on peut déclencher et/ou ajuster l'action de ces moyens de variation 2, 3 en fonction des valeurs de champ électrique ambiant et/ou de variation de ce champ électrique ambiant mesurées par ces moyens de mesure 4.

Les moyens de mesure 4 peuvent, par exemple et de manière non limitative, consister en des moyens permettant de mesurer la valeur du champ électrique ambiant et/ou la variation de champ électrique ambiant au cours du temps et de comparer la valeur du champ et/ou la valeur de sa variation à un seuil prédéterminé qui sera fonction, par exemple, de la situation géographique et des paramètres environnant le lieu d'installation de l'électrode captrice 1.

On peut également concevoir, et sans sortir du cadre de la présente invention, des moyens de mesure 4 consistant en une diode présentant un seuil prédéterminé ou un éclateur électrique, ou tout autre moyen qui permet de déclencher les moyens de variation 2, 3 en fonction de la valeur du champ électrique ambiant et/ou de sa variation au cours du temps.

Par exemple et de manière non limitative, les moyens de mesure 4 et les moyens de variation 2, 3 sont alimentés par le champ électrique de l'orage et sont donc autonomes ; cette configuration facilite ainsi la maintenance et l'entretien du dispositif de protection contre la foudre. En outre, dans ce mode de réalisation, le pilotage des moyens de variation 2, 3 par les moyens de mesure 4 est synchronisé avec le phénomène naturel.

Ainsi, lorsque la variation du champ électrique ambiant au cours du temps augmente significativement, tel que cela est le cas lorsqu'un traceur descendant approche de l'extrémité libre 1a de l'électrode captrice 1, les moyens de déclenchement sont actionnés, et déclenchent les moyens de variation 2, 3.

Dans un exemple de réalisation, les moyens de variation 2, 3 comprennent un moyen auxiliaire 2 disposé au voisinage de l'extrémité libre 1a de l'électrode captrice 1, et relié à un générateur de tension électrique 3.

Ce moyen auxiliaire 2 est configuré pour être porté à un certain potentiel électrique.

Ainsi, à titre d'exemple, en polarisant ce moyen auxiliaire 2 avec une tension électrique de signe opposé à celui du champ ambiant, que l'on aura préalablement détecté par exemple avec les moyens de mesure 4 mentionnés plus haut, ou en le polarisant avec une tension nulle, on rend l'extrémité libre 1a de l'électrode captrice 1 virtuellement plus arrondie en modifiant son coefficient d'amplification du champ électrique local. Tel que détaillé précédemment, cette géométrie virtuelle de l'extrémité libre 1a permet, entre autres, de prolonger l'existence de l'effet couronne au voisinage de l'extrémité libre 1a, et d'éviter la formation trop précoce de pulses d'effet couronne, qui aurait pour effet d'alimenter un matelas de charges et donc d'abaisser localement le champ électrique au voisinage de l'extrémité libre 1a sans permettre la favorisation d'un canal conducteur.

A l'inverse, en polarisant ce moyen auxiliaire 2 avec une tension électrique de même signe que celui du champ ambiant, que l'on aura préalablement détecté par exemple avec les moyens de mesure 4 mentionnés plus haut, on rend l'extrémité libre 1a de l'électrode captrice 1 virtuellement plus effilée en modifiant son coefficient d'amplification du champ électrique local. Tel que détaillé précédemment, cette géométrie virtuelle de l'extrémité libre 1a permet, entre autres, d'augmenter le champ électrique au voisinage de l'extrémité libre 1a, et de favoriser, lorsque la valeur obtenue par les moyens de mesure dépasse un seuil prédéterminé, la formation d'un traceur ascendant qui puisse établir le contact avec un traceur descendant pour donner naissance à un canal conducteur.

Le procédé objet de la présente invention consiste donc à modifier la géométrie virtuelle de l'extrémité libre 1a de l'électrode captrice 1 en faisant varier le coefficient d'amplification en fonction de la valeur du champ électrique ambiant et/ou de sa variation au cours du temps.

Pour ce faire, le procédé comporte une étape initiale au cours de laquelle le rayon de courbure de l'extrémité libre 1a de l'électrode captrice 1 est virtuellement augmenté, en polarisant le moyen auxiliaire 2 avec une tension nulle ou de signe opposé à celui du champ ambiant.

On pourrait également concevoir, et sans sortir du cadre de la présente invention, une extrémité libre 1a physiquement arrondie, de telle sorte qu'il ne soit pas nécessaire de polariser préalablement le moyen auxiliaire 2 avec une tension nulle ou de signe opposé à celui du champ ambiant.

Les moyens de mesure 4 permettent ensuite de mesurer la valeur du champ électrique ambiant et/ou sa variation au cours du temps et de comparer cette valeur à un seuil prédéterminé.

Lorsque la mesure du champ électrique ambiant et/ou sa variation dépassent le seuil prédéterminé, le rayon de courbure de l'extrémité libre 1a de l'électrode captrice 1 est virtuellement réduit, en polarisant le moyen auxiliaire 2 avec une tension de même signe que celui du champ ambiant.

On pourrait également concevoir, et sans sortir du cadre de la présente invention, une extrémité libre 1a physiquement effilée, de telle sorte que, lorsque la mesure du champ électrique ambiant et/ou sa variation dépassent le seuil prédéterminé, la polarisation nulle ou de signe opposé à celui du champ ambiant est interrompue, pour que l'extrémité libre 1a de l'électrode captrice 1 passe d'une configuration virtuellement arrondie à une configuration physiquement effilée.

De la même manière, on pourrait concevoir une polarisation préalable du moyen auxiliaire 2 avec une première tension de signe opposé à celui du champ ambiant, une seconde tension, toujours de signe opposé à celui du champ ambiant mais de valeur supérieure à celle de la première tension étant appliquée au moyen auxiliaire 2, afin de rendre l'extrémité libre 1a virtuellement moins arrondie, lorsque la mesure du champ électrique ambiant et/ou sa variation dépassent le seuil prédéterminé.

Par analogie, on pourrait concevoir une polarisation préalable du moyen auxiliaire 2 avec une première tension de même signe que celui du champ ambiant, une seconde tension, toujours du même signe que celui du champ ambiant mais de valeur supérieure à celle de la première tension étant appliquée au moyen auxiliaire 2, afin de rendre l'extrémité libre 1a virtuellement plus effilée, lorsque la mesure du champ électrique ambiant et/ou sa variation dépassent le seuil prédéterminé.

L'invention permet ainsi de contrôler de manière électronique la géométrie virtuelle de l'extrémité libre 1a de l'électrode captrice 1 en modifiant la polarisation du moyen auxiliaire 2 en fonction du champ électrique ambiant et/ou de sa variation dans le temps mesurés par les moyens de mesure 4. La polarisation du moyen auxiliaire 2 permet ainsi de déformer les lignes de champ et de passer du comportement d'une extrémité libre 1a présentant une pointe arrondie à une extrémité libre 1a présentant une pointe effilée.

On a représenté dans les figures 5A et 5B respectivement deux exemples de réalisation, en ne faisant apparaître que l'électrode captrice 1 et le moyen auxiliaire 2 pour simplifier.

Dans ces deux exemples, le moyen auxiliaire entoure l'électrode captrice 1, sans dépasser l'extrémité libre 1a, qui est de préférence en forme de pointe, le moyen auxiliaire 2 et l'électrode captrice 1 n'étant pas en contact l'un avec l'autre.

Différents essais ont permis de déterminer que la distance entre l'électrode captrice 1 et le moyen auxiliaire 2 devait être de préférence inférieure ou égale à 15 mm, en particulier dans le cas d'une tige de diamètre principal de l'ordre de 2 cm.

Par ailleurs, le moyen auxiliaire 2 est placé en-dessous de l'extrémité libre 1a de l'électrode captrice 1.

De préférence, ce moyen auxiliaire sera placé à quelques centimètres, voire quelques dizaines de centimètres, en-dessous de l'extrémité libre 1a, en fonction de paramètres tels que les dimensions de l'électrode captrice 1, les dimensions du ou des éléments constituant le moyen auxiliaire 2, de la tension électrique appliquée à ce moyen auxiliaire 2.

Cette distance peut donc varier, tout comme la distance séparant l'électrode captrice 1 et le moyen auxiliaire 2, mais le moyen auxiliaire 2 doit rester dans le voisinage de l'extrémité libre 1a tel que défini plus haut.

Ce moyen auxiliaire 2 comprend un, voire prend la forme d'un, élément métallique 2.

Dans l'exemple représenté à la figure 5A, l'élément métallique 2 est un cylindre creux, et dans l'exemple représenté à la figure 5B, cet élément métallique 2 est un disque creux 2 ou un anneau 2.

La présente description est donnée à titre d'exemple et n'est donc pas limitative de l'invention.

En particulier, les moyens de variation 2, 3 ne sont pas limités à des moyens comprenant un moyen auxiliaire 2 lui-même comprenant un élément métallique 2 de forme cylindrique ou annulaire.

Egalement, l'invention ne se limite pas à un dispositif dans lequel les moyens de variation 2, 3 seraient commandés par des moyens de mesure 4 du champ électrique ambiant ou de ses variations.

En outre, le moyen auxiliaire 2 peut entourer complètement l'électrode captrice 1, comme c'est le cas avec le cylindre de la figure 5A ou l'anneau de la figure 5B, ou l'entourer seulement partiellement, voire être simplement disposé à côté.

## Revendications

1. Dispositif de protection contre la foudre comprenant une électrode captrice (1) configurée pour capter un courant de foudre et pour le décharger dans la terre, reliée à la terre et présentant une extrémité libre (1a), ledit dispositif comprenant des moyens de variation (2, 3) du comportement électrique de l'extrémité libre (1a), configurés pour faire varier au moins le coefficient d'amplification du champ électrique local au voisinage de cette extrémité libre (1a), ledit dispositif étant **caractérisé en ce qu'**il comprend également des moyens de mesure (4) du champ électrique ambiant et/ou de sa variation au cours du temps, reliés aux moyens de variation (2, 3) du comportement électrique de l'extrémité libre (1a), et des moyens de déclenchement pour déclencher lesdits moyens de variation (2, 3) en fonction de la valeur du champ électrique ambiant et/ou de sa variation au cours du temps obtenue par les moyens de mesure (4).

2. Dispositif selon la revendication 1, **caractérisé en ce que** les moyens de variation (2, 3) du comportement électrique de l'extrémité libre (1a) comprennent un moyen auxiliaire (2) configuré pour être porté à au moins un potentiel électrique déterminé, disposé au voisinage de l'extrémité libre (1a) et relié à un générateur de tension électrique (3).

3. Dispositif selon la revendication 2, **caractérisé en ce que** le moyen auxiliaire (2) est disposé en-dessous de l'extrémité libre (1a).

4. Dispositif selon la revendication 2 ou 3, **caractérisé en ce que** le moyen auxiliaire (2) est disposé à une distance de l'électrode captrice (1) inférieure ou égale à 15 mm.

5. Dispositif selon l'une quelconque des revendications 2 à 4, **caractérisé en ce que** le moyen auxiliaire (2) comprend un élément métallique (2) constitué d'un anneau (2), d'un disque ou d'un cylindre creux (2).

6. Dispositif selon l'une quelconque des revendications 2 à 5, **caractérisé en ce que** les moyens de déclenchement sont configurés pour polariser le moyen auxiliaire (2) avec une tension électrique du même signe que celui du champ ambiant, de telle sorte que l'extrémité libre (1a) de l'électrode captrice (1) est rendue virtuellement plus effilée.

7. Dispositif selon l'une quelconque des revendications 2 à 6, **caractérisé en ce que** les moyens de déclenchement sont configurés pour polariser le moyen auxiliaire (2) avec une tension électrique de signe opposé à celui du champ ambiant ou avec une tension nulle, de telle sorte que l'extrémité libre (1a) de l'électrode captrice (1) est rendue virtuellement plus arrondie.

8. Procédé de captation d'un courant de foudre dans une électrode captrice (1) reliée à la terre et présentant une extrémité libre (1a), consistant notamment à faire varier au moins le coefficient d'amplification du champ électrique local au voisinage de cette extrémité libre (1a), par l'intermédiaire de moyens de variation (2, 3) du comportement électrique de cette extrémité libre (1a), ledit procédé étant **caractérisé en ce qu'**il comprend au moins une étape de mesure du champ électrique ambiant et/ou de sa variation au cours du temps, et au moins une étape de variation de la caractéristique électrique de l'extrémité libre (1a) en fonction de la valeur mesurée du champ électrique ambiant et/ou de sa variation au cours du temps.

9. Procédé selon la revendication 8, **caractérisé en ce que** la variation de la caractéristique électrique de l'extrémité libre (1a) est obtenue en faisant varier le potentiel électrique d'un moyen auxiliaire (2) disposé au voisinage de l'extrémité libre (1a) et relié à un générateur de tension électrique (3).

10. Procédé selon la revendication 9, **caractérisé en ce qu'**il comprend une étape au cours de laquelle le moyen auxiliaire (2) est polarisé avec une tension de signe opposé à celui du champ ambiant ou une tension nulle, de telle sorte que l'extrémité libre (1a) de l'électrode captrice est rendue virtuellement plus arrondie.

11. Procédé selon la revendication 9 ou 10, **caractérisé en ce qu'**il comprend une étape au cours de laquelle le moyen auxiliaire (2) est polarisé avec une tension de même signe que celui du champ ambiant, de telle sorte que l'extrémité libre (1a) de l'électrode captrice est rendue virtuellement plus effilée.

12. Procédé selon l'une quelconque des revendications 9 à 11, **caractérisé en ce qu'**il comprend une première étape au cours de laquelle le moyen auxiliaire (2) est polarisé avec une tension de signe opposé à celui du champ ambiant ou avec une tension nulle, suivie d'une deuxième étape au cours de laquelle le moyen auxiliaire (2) est polarisé avec une tension de même signe que celui du champ ambiant.

13. Procédé selon l'une quelconque des revendications 9 à 12, **caractérisé en ce qu'**il comprend une première étape au cours de laquelle le moyen auxiliaire (2) est polarisé avec une tension de signe opposé à celui du champ ambiant, suivie d'une deuxième étape au cours de laquelle le moyen auxiliaire (2) est polarisé avec une tension nulle ou une tension de même signe que celui du champ ambiant.

14. Procédé selon l'une quelconque des revendications 9 à 13, **caractérisé en ce qu'**il comprend une première étape au cours de laquelle le moyen auxiliaire (2) est polarisé avec une première tension de signe opposé à celui du champ ambiant, suivie d'une deuxième étape au cours de laquelle le moyen auxiliaire (2) est polarisé avec une deuxième tension de signe opposé à celui du champ ambiant, la valeur de la deuxième tension étant supérieure à celle de la première tension.

15. Procédé selon l'une quelconque des revendications 9 à 14, **caractérisé en ce qu'**il comprend une première étape au cours de laquelle le moyen auxiliaire (2) est polarisé avec une première tension de même signe que celui du champ ambiant, suivie d'une deuxième étape au cours de laquelle le moyen auxiliaire (2) est polarisé avec une deuxième tension de même signe que celui du champ ambiant, la valeur de la deuxième tension étant supérieure à celle de la première tension.

16. Procédé selon l'une quelconque des revendications 12 à 15, **caractérisé en ce que** la deuxième étape est réalisée lorsque la variation instantanée du champ ambiant au cours du temps dépasse un seuil prédéterminé.

## Patentansprüche

1. Blitzschutzeinrichtung, umfassend eine aufnehmende Elektrode (1), die dazu ausgebildet ist, einen Blitzstrom aufzunehmen und ihn in die Erde zu entladen, die an Erde gelegt ist und ein freies Ende (1a) aufweist, wobei die Einrichtung Mittel zur Änderung (2, 3) des elektrischen Verhaltens des freien Endes (1a) umfaßt, die dazu ausgebildet sind, wenigstens den Verstärkungsfaktor des lokalen elektrischen Feldes in der Nähe dieses freien Endes (1a) zu verändern, wobei die Einrichtung **dadurch gekennzeichnet ist, daß** sie auch Mittel zum Messen (4) des elektrischen Umgebungsfeldes und/oder seiner Änderung im Laufe der Zeit, die mit den Mitteln zur Änderung (2, 3) des elektrischen Verhaltens des freien Endes (1 a) verbunden sind, sowie Auslösemittel umfaßt, um die Änderungsmittel (2, 3) in Abhängigkeit des Wertes des elektrischen Umgebungsfeldes und/oder seiner Änderung im Laufe der Zeit, der durch die Meßmittel (4) erhalten wird, auszulösen.

2. Einrichtung nach Anspruch 1, **dadurch gekennzeichnet, daß** die Mittel zur Änderung (2, 3) des elektrischen Verhaltens des freien Endes (1a) ein Hilfsmittel (2) umfassen, das dazu ausgebildet ist, auf wenigstens ein bestimmtes elektrisches Potential gebracht zu werden, das in der Nähe des freien Endes (1a) angeordnet und mit einem elektrischen Spannungsgenerator (3) verbunden ist.

3. Einrichtung nach Anspruch 2, **dadurch gekennzeichnet, daß** das Hilfsmittel (2) unterhalb des freien Endes (1a) angeordnet ist.

4. Einrichtung nach Anspruch 2 oder 3, **dadurch gekennzeichnet, daß** das Hilfsmittel (2) in einem Abstand von weniger als oder gleich 15 mm von der aufnehmenden Elektrode (1) angeordnet ist.

5. Einrichtung nach einem der Ansprüche 2 bis 4, **dadurch gekennzeichnet, daß** das Hilfsmittel (2) ein Metallelement (2), das von einem Ring (2), einer Scheibe oder einem Hohlzylinder (2) gebildet ist, umfaßt.

6. Einrichtung nach einem der Ansprüche 2 bis 5, **dadurch gekennzeichnet, daß** die Auslösemittel dazu ausgebildet sind, das Hilfsmittel (2) mit einer elektrischen Spannung mit gleichem Vorzeichen wie das Umgebungsfeld zu polarisieren, so daß das freie Ende (1a) der aufnehmenden Elektrode (1) virtuell spitz zulaufender gemacht wird.

7. Einrichtung nach einem der Ansprüche 2 bis 6, **dadurch gekennzeichnet, daß** die Auslösemittel dazu ausgebildet sind, das Hilfsmittel (2) mit einer elektrischen Spannung mit zu demjenigen des Umgebungsfeldes entgegengesetztem Vorzeichen oder mit einer Nullspannung zu polarisieren, so daß das freie Ende (1a) der aufnehmenden Elektrode (1) virtuell abgerundeter gemacht wird.

8. Verfahren zum Auffangen eines Blitzstromes in einer aufnehmenden Elektrode (1), die an Erde gelegt ist und ein freies Ende (1a) aufweist, das insbesondere darin besteht, wenigstens den Verstärkungsfaktor des lokalen elektrischen Feldes in der Nähe dieses freien Endes (1a) durch Mittel zur Änderung (2, 3) des elektrischen Verhaltens dieses freien Endes (1a) zu verändern, wobei das Verfahren **dadurch gekennzeichnet ist, daß** es wenigstens einen Schritt zum Messen des elektrischen Umgebungsfeldes und/oder seiner Änderung im Laufe der Zeit sowie wenigstens einen Schritt zur Änderung der elektrischen Kennlinie des freien Endes (1a) in Abhängigkeit des gemessenen Wertes des elektrischen Umgebungsfeldes und/oder seiner Änderung im Laufe der Zeit umfaßt.

9. Verfahren nach Anspruch 8, **dadurch gekennzeichnet, daß** die Änderung der elektrischen Kennlinie des freien Endes (1a) dadurch erreicht wird, daß das elektrische Potential eines Hilfsmittels (2), das in der Nähe des freien Endes (1a) angeordnet und mit einem elektrischen Spannungsgenerator (3) verbunden ist, verändert wird.

10. Verfahren nach Anspruch 9, **dadurch gekennzeichnet, daß** es einen Schritt umfaßt, im Laufe dessen das Hilfsmittel (2) mit einer Spannung mit zu demjenigen des Umgebungsfeldes entgegengesetztem Vorzeichen oder einer Nullspannung polarisiert wird, so daß das freie Ende (1a) der aufnehmenden Elektrode virtuell abgerundeter gemacht wird.

11. Verfahren nach Anspruch 9 oder 10, **dadurch gekennzeichnet, daß** es einen Schritt umfaßt, im Laufe dessen das Hilfsmittel (2) mit einer Spannung mit gleichem Vorzeichen wie das Umgebungsfeld polarisiert wird, so daß das freie Ende (1a) der aufnehmenden Elektrode virtuell spitz zulaufender gemacht wird.

12. Verfahren nach einem der Ansprüche 9 bis 11, **dadurch gekennzeichnet, daß** es einen ersten Schritt umfaßt, im Laufe dessen das Hilfsmittel (2) mit einer Spannung mit zu demjenigen des Umgebungsfeldes entgegengesetztem Vorzeichen oder mit einer Nullspannung polarisiert wird, an den sich ein zweiter Schritt anschließt, im Laufe dessen das Hilfsmittel (2) mit einer Spannung mit gleichem Vorzeichen wie das Umgebungsfeld polarisiert wird.

13. Verfahren nach einem der Ansprüche 9 bis 12, **dadurch gekennzeichnet, daß** es einen ersten Schritt umfaßt, im Laufe dessen das Hilfsmittel (2) mit einer Spannung mit zu demjenigen des Umgebungsfeldes entgegengesetztem Vorzeichen polarisiert wird, an den sich ein zweiter Schritt anschließt, im Laufe dessen das Hilfsmittel (2) mit einer Nullspannung oder einer Spannung mit gleichem Vorzeichen wie das Umgebungsfeld polarisiert wird.

14. Verfahren nach einem der Ansprüche 9 bis 13, **dadurch gekennzeichnet, daß** es einen ersten Schritt umfaßt, im Laufe dessen das Hilfsmittel (2) mit einer ersten Spannung mit zu demjenigen des Umgebungsfeldes entgegengesetztem Vorzeichen polarisiert wird, an den sich ein zweiter Schritt anschließt, im Laufe dessen das Hilfsmittel (2) mit einer zweiten Spannung mit zu demjenigen des Umgebungsfeldes entgegengesetztem Vorzeichen polarisiert wird, wobei der Wert der zweiten Spannung größer als derjenige der ersten Spannung ist.

15. Verfahren nach einem der Ansprüche 9 bis 14, **dadurch gekennzeichnet, daß** es einen ersten Schritt umfaßt, im Laufe dessen das Hilfsmittel (2) mit einer ersten Spannung mit gleichem Vorzeichen wie das Umgebungsfeld polarisiert wird, an den sich ein zweiter Schritt anschließt, im Laufe dessen das Hilfsmittel (2) mit einer zweiten Spannung mit gleichem Vorzeichen wie das Umgebungsfeld polarisiert wird, wobei der Wert der zweiten Spannung größer als derjenige der ersten Spannung ist.

16. Verfahren nach einem der Ansprüche 12 bis 15, **dadurch gekennzeichnet, daß** der zweite Schritt durchgeführt wird, wenn die momentane Änderung des Umgebungsfeldes im Laufe der Zeit eine vorbestimmte Schwelle überschreitet.

## Claims

1. A lightning protection device comprising a capture electrode (1) configured to capture a lightning current for discharging thereof into the ground, earthed and having a free end (1a), said device comprising variation means (2, 3) for varying the electrical behaviour of the free end (1a), configured to cause a variation in at least the amplification coefficient of the local electric field in the vicinity of this free end (1a), said device being **characterized in that** it also comprises measurement means (4) for measuring the ambient electric field and/or its variation over time, connected to the variation means (2, 3) for varying the electrical behaviour of the free end (1a), and trigger means for triggering said variation means (2, 3) as a function of the value of the ambient electric field and/or its variation over time obtained by the measurement means (4).

2. The device according to claim 1, **characterized in that** the variation means (2, 3) for varying the electrical behaviour of the free end (1a) comprise auxiliary means (2) configured to be brought to at least one determined electric potential, arranged in the vicinity of the free end (1a) and connected to an electric voltage generator (3).

3. The device according to claim 2, **characterized in that** the auxiliary means (2) are arranged below the free end (1a).

4. The device according to claim 2 or 3, **characterized in that** the auxiliary means (2) are arranged at a distance from the capture electrode (1) of 15 mm or less.

5. The device according to any of claims 2 to 4, **characterized in that** the auxiliary means (2) comprise a metallic element (2) formed of a ring (2), a disc or a hollow cylinder (2).

6. The device according to any of claims 2 to 5, **characterized in that** the trigger means are configured to polarize the auxiliary means (2) with an electric voltage of same sign as the sign of the ambient field, so that the free end (1a) of the capture electrode (1) is made virtually sharper.

7. The device according to any of claims 2 to 6, **characterized in that** the trigger means are configured to polarize the auxiliary means (2) with an electric voltage of opposite sign to the sign of the ambient field or with a zero voltage, so that the free end (1a) of the capture electrode (1) is made virtually more rounded.

8. A method for capturing a lightning current in a capture electrode (1) earthed and having a free end (1a), consisting in particular of causing the variation of at least the amplification coefficient of the local electric field in the vicinity of this free end (1a), via variation means (2, 3) varying the electrical behaviour of this free end (1a), said method being **characterized in that** it comprises at least a step to measure the ambient electric field and/or its variation over time, and at least a step to vary the electrical characteristic of the free end (1a) as a function of the measured value of the ambient electric field and/or its variation over time.

9. The method according to claim 8, **characterized in that** the variation of the electrical characteristic of the free end (1a) is obtained by causing a variation in the electric potential of auxiliary means (2) arranged in the vicinity of the free end (1a) and connected to an electric voltage generator (3).

10. The method according to claim 9, **characterized in that** it comprises a step at which the auxiliary means (2) are polarized with a voltage of opposite sign to the sign of the ambient field or with a zero voltage, so that the free end (1a) of the capture electrode is made virtually more rounded.

11. The method according to claim 9 or 10, **characterized in that** it comprises a step at which the auxiliary means (2) are polarized with a voltage of same sign as the sign of the ambient field, so that the free end (1a) of the capture electrode is made virtually sharper.

12. The method according to any of claims 9 to 11, **characterized in that** it comprises a first step at which the auxiliary means (2) are polarized with a voltage of opposite sign to the sign of the ambient field, or with a zero voltage, followed by a second step at which the auxiliary means (2) are polarized with a voltage of same sign as the sign of the ambient field.

13. The method according to any of claims 9 to 12, **characterized in that** it comprises a first step at which the auxiliary means (2) are polarized with a voltage of opposite sign to the sign of the ambient field, followed by a second step at which the auxiliary means (2) are polarized with a zero voltage or a voltage of same sign as the sign of the ambient field.

14. The method according to any of claims 9 to 13, **characterized in that** it comprises a first step at which the auxiliary means (2) are polarized with a first voltage of opposite sign to the sign of the ambient field, followed by a second step at which the auxiliary means (2) are polarized with a second voltage of opposite sign to the sign of the ambient field, the value of the second voltage being higher than the value of the first voltage.

15. The method according to any of claims 9 to 14, **characterized in that** it comprises a first step at which the auxiliary means (2) are polarized with a first voltage of same sign as the sign of the ambient field, followed by a second step at which the auxiliary means (2) are polarized with a second voltage of same sign as the sign of the ambient field, the value of the second voltage being higher than the value of the first voltage.

16. The method according to any of claims 12 to 15, **characterized in that** the second step is performed when the instantaneous variation in the ambient field over time exceeds a predetermined threshold.
